# EUROPEAN PATENT SPECIFICATION

(11) **EP 1 353 835 B1**
(45) Date of publication and mention of the grant of the patent: **14.11.2007**
(21) Application number: 01992256.6
(22) Date of filing: 20.12.2001
(51) Int. Cl.: B62D 55/28, B60B 15/00, A01B 33/00

(54) **LOW GROUND PRESSURE TIRE CHAINS FOR SKID-STEER LOADERS AND OTHER CONSTRUCTION MACHINERY**
REIFENKETTEN MIT GERINGEM BODENDRUCK FÜR KOMPAKTLADER UND ANDERE BAUMASCHINEN
CHAINES D'ADHERENCE BASSE PRESSION AU SOL POUR CHARGEURS A DIRECTION DIFFERENTIELLE ET AUTRE MACHINES DE CONSTRUCTION

(30) Priority: 22.12.2000 US 747319; 04.12.2001 US 5116
(43) Date of publication of application: 22.10.2003
(73) Proprietor: McLaren Group Holdings Pte, Ltd., Singapore 048544 (SG)
(72) Inventor: Richardson, John Doyle, Paramount, CA 90723 (US)
(74) Representative: Tollett, Ian
(86) International application number: PCT/US2001/049732
(87) International publication number: WO 2002/051692

(56) References cited:
- US-A- 1 077 129
- US-A- 1 633 259
- US-A- 3 133 767
- US-A- 4 605 264
- US-A- 5 429 429
- US-A- 5 951 124
- US-A- 5 988 776
- US-A- 6 010 199
- US-B1- 6 203 127
- US-B1- 6 299 265

## Description

### TECHNICAL FIELD

This invention relates to tire chains. More particularly, the present invention relates to tire chains used on compact front-end loaders and other similar construction machinery to improve floatation, traction, and handling during operation.

### BACKGROUND OF THE INVENTION

For many years cars, trucks, and other tire mounted vehicles have used tire chains to improve operational control over soft or slippery road surfaces.

### A. Skid Steer Loaders

More recently, construction machinery owners have attempted to use tire chains on tire mounted construction machines. This is especially true for compact front-end loaders, which will be referred to as skid steers. Skid steers are powerful compact loaders used to dig, haul, or lift earth and other materials. The main components of skid steer loaders include an operator's cab, a diesel or gasoline engine, hydraulic pumps, hydrostatic transmission, a pair of lift arms, a bucket operatively attached at the 25 distal ends of the lift arms, and two pairs of opposing tires. Many other construction machines and vehicles are composed of similar components. What separates the skid steer from its counterpart construction machinery is its unique steering system.

### B. Steering Systems

Front-wheel steering is a popular directional steering system used on tire-mounted vehicles such as cars and trucks. A car usually steers or turns by changing the direction of the front tires. Turning occurs because while being in motion the centerline of the front tires is no longer parallel or in line with the centerline of the rear tires. Similar concepts, e.g. rear-wheel and all-wheel steering, can be seen in typical forklifts.

Many tire-mounted construction machines use articulated directional steering. Articulated steering works because the vehicles are designed in two separate independent sections. The two sections are connected at a pivotal point. Whenever the two sections pivot and their centerlines point in different (unparallel) directions, the vehicle turns. Articulated steering can be seen in most front-end loaders over 10,000 pounds.

### C. Steering System For Skid Steer Loaders

The skid steer loaders use a directional steering system. In skid steers, the centerlines of the front and rear tires remain parallel and in line with each other at all times. This kind of steering system can be also seen in excavators, bulldozers and tanks, and is one of the very few steering systems that allow the vehicle to turn 360 degrees without moving forward or backward.

The directional steering capabilities of a skid steer arises from the independent pairs of left and right side drive systems. Tire-mounted skid steers have four axles, two per side of the machine. The two axles per side are spaced typically 3 feet to 4 feet apart on the same lateral axis and evenly protruding from the machine body. Identical wheels and tires are mounted on each of the axles. A key factor for the turning capabilities of skid steer loaders is that the left and right pairs of opposing tires are powered by independent drive systems. As a result, when the left and right pairs of opposing tires are moving forward at the same speed, then the machine moves straight forward. However, if the left pair of tires is moving forward at a different speed than the right pair of tires, then the loader will slide and turn. The machine turns in the direction of the side with the faster moving pair of tires. Moreover, if the left pair of tires is moving forward and the right pair of tires is moving backward, or vice versa, at the same speed, then the skid steer performs a 360-degree rotation without moving forward or backward. Since all four Skid steer tires remain parallel and in line to each other at all times, tire chains can be utilized more efficiently to improve floatation, traction and control.

### D. Applying Tire Chains To Skid Steers

In the last decade, the skid steer has become a very popular machine in the construction industry. It has won recognition for being a versatile machine (for example, being the construction vehicle with a great variety of attachments), and a compact and maneuverable machine that can handle many types of construction jobs. However, occasionally the tires of the skid steer tend to slip, especially in snow, mud, sand, and other slippery or boggy conditions that are often found on job sites. The insufficient traction of the four skid steer tires under certain conditions results in unsatisfactory and often risky operation and performance. In an attempt to resolve this, tire chains have been applied to skid steers.

When cars or trucks use tire chains, each tire must use its own chain, the so-called "single-wheel" tire chain. Due to the unique steering system of the skid steer -- all wheels remaining parallel and in line with each other at all times -- a more advanced tire chain can be used. The skid steer "two-wheel" tire chain is wrapped around each pair of left and right side tires. The two-wheel tire chain is more efficient because more chain is making contact with the operating ground. The whole area between the two tires on each side of the machine (usually 3 to 4 feet) is used for additional traction and floatation. This feature of the skid steer two-wheel tire chain is in sharp contrast to the single-wheel tire chains, which utilize only the operating ground that is immediately under the tire. Depending on the spread of the wheelbases of the skid steer, the contact area between the operating ground and the two-wheel tire chain can be on average 5 to 10 times greater than that of the single-wheel tire chain.

### E. Current Tire Chains For Skid Steer

Current tire chains made for skid steers attempt to solve the problem with traction insufficiency under slippery or boggy operating ground conditions. The main component of the current skid steer two-wheel tire chains is the "pad." The pad usually consists of a crossbar with two opposing sidewalls -- one on each side of the crossbar. The sidewalls, which are set perpendicular to the connecting crossbar, create a valley or groove. When subsequent pads are connected together with links to comprise a chain, a continuous groove is formed for skid steer tires to ride within. The sidewalls of each pad keep the chain aligned with the tires and at the same time prevent the tires from derailing off the chain.

### F. Drawbacks Of Current Two-Wheel Tire Chains For Skid Steers

Current two-wheel tire chains for skid steers generally work mechanically well. However, these tire chains provide poor enhancement to the traction of the loader machine in slippery or boggy conditions and offer little or no floatation. The term "floatation" II refers to the wheels and chains of the loader remaining above the ground surface, rather than sinking into the ground during operation of the skid steer. For the optimal performance of the skid steer, both problems of traction and floatation have to be resolved simultaneously. In addition to the traction and floatation problems, the current two-wheel tire chains for skid steers impose many other inconvenient restrictions that need consideration.

One drawback is that current skid steer two-wheel tire chains have a large open space between adjacent pads and between the two crossbars of each individual pad. The open spaces between adjacent pads and between the crossbars of the single pads limits both traction and floatation of the loader. For example, when operating the skid steer in mud, the open spaces within the chain allow the mud to pass upwards. This causes the machine to sink, and creates extreme operating stresses for the drive motors. Indeed, skid steers using the current two-wheel tire chains in mud have to deal with a greater drive motor pressure than not having a chain at all, since the bare tires tend to spin in the mud, while the skid steers with current chains sink into mud. Traction is also lost due to the open spaces. When the chains move and push the mud, the mud simply moves over the crossbars of the pads. When the machine tries to move forward in the mud, the chains whip and mix the mud, instead of effectively pushing it backward and thus creating the thrust necessary to move the machine forward. The same result can be observed while working in sand, pebble and other like materials.

It has been recognized that the origin of problem with the large open spaces in current two-wheel tire chains is in the association with the single-wheel tire chains. The single-wheel tire chains rely on the tire itself to close the open spaces within the chain. The crossbars in the single-wheel tire chains provide only for the enhanced traction, while the tire provides for the floatation. In contrast, in the skid steer two-wheel tire chains in which the contact area between the chains and the operating ground is 5 to 10 times greater, there is currently no mechanism to deal with the floatation problem and, therefore, optimal traction cannot be reached as well.

### G. Drawbacks Of Current Tire Chains For Skid Steers

While tire chains have been used successfully with skid steer loaders, there are a number of drawbacks associated with such use. During operation of a skid steer with a set of tire chains, the contact surface of all pads wear down as the pads move on the operating ground. The pads eventually break or their limited traction capabilities diminish to an unusable level. The pads are the largest and most costly component of the tire chain. They are difficult and economically unsound to repair. The user has no other choice but to purchase a whole new set of chains, which often come at a considerable cost.

Another major drawback is the destructive nature of the current tire chains when used on concrete, asphalt and similar hard finished surfaces. As mentioned earlier, skid steers have become very popular machines on construction sites. This is especially true for small jobs sites in cities and residential areas where sidewalks, driveways, and asphalt are prevalent. Skid steer tire chains are heavy and difficult to handle, which makes dismantling or assembling a set of chains a time consuming venture that most users prefer to avoid.. Damage to the operating ground occurs because the crossbars on each pad are constructed either of steel or cast iron. As the skid steer moves forward, the driving force delivered by the tire chain is usually greater than what the contacting surface can withstand. This causes the surface to scratch, crack or break. As a result, the current skid steer tire chains limit the operating grounds over which the machine may travel or operate, without such damaging drawbacks.

Accordingly, there is a need in the art for low ground pressure tire chains for skid steers to cope with the above-mentioned problems and inconveniences. It is to the provision of such that the present invention is directed.

### SUMMARY OF THE PRESENT INVENTION

The present invention starts from the prior art known from US-A-5 951 124 showing all of the features of the preamble of present claim 1. The invention is defined by claim 1 and a track according to claim 14.

Objects and advantages of the invention will become apparent upon reading of the detailed description in conjunction with the drawings.

### A BRIEF INTRODUCTION OF THE INVENTION

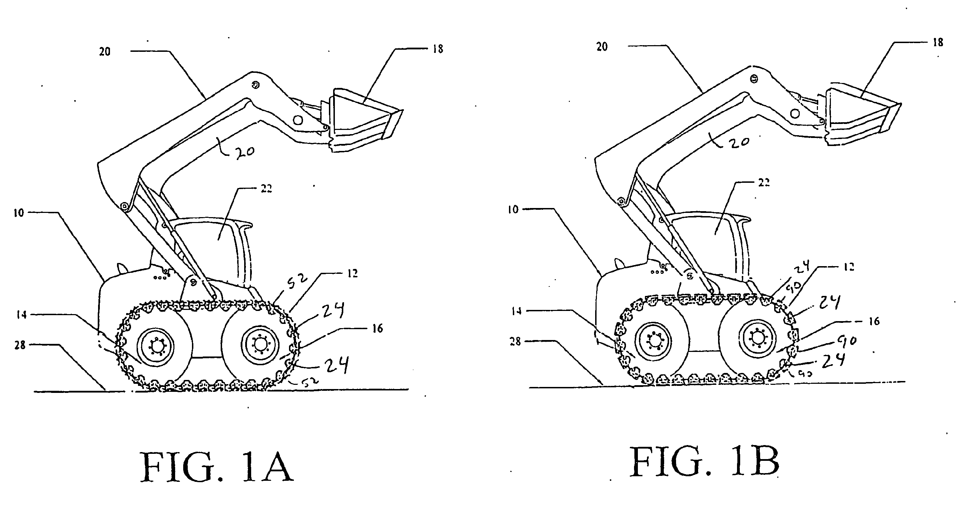

With general reference to the drawings (described below), the present invention overcomes the limitations and restrictions of skid steer tires (14, 16) and current skid steer tire chains that occur both on slippery boggy surfaces and hard finished surfaces. As shown in Fig. 1, the track (12) and base units (24) comprising the track provide the skid steer 10 with an improved apparatus that resolves problems of floatation and traction, wear of the main chain components, and adverse effects on hard finished surfaces. In addition, the present invention stabilizes the maneuverability of skid steer loaders on slopes and enhances the overall control of the machine by the operator.

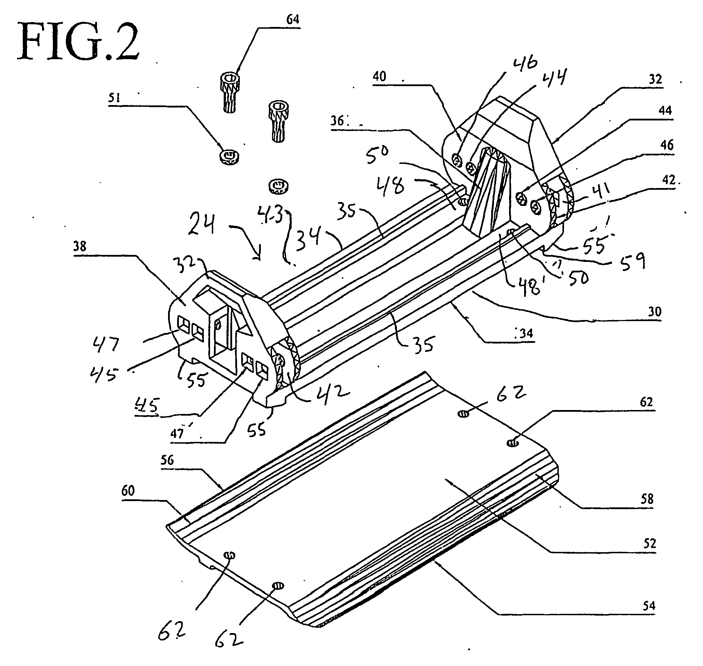

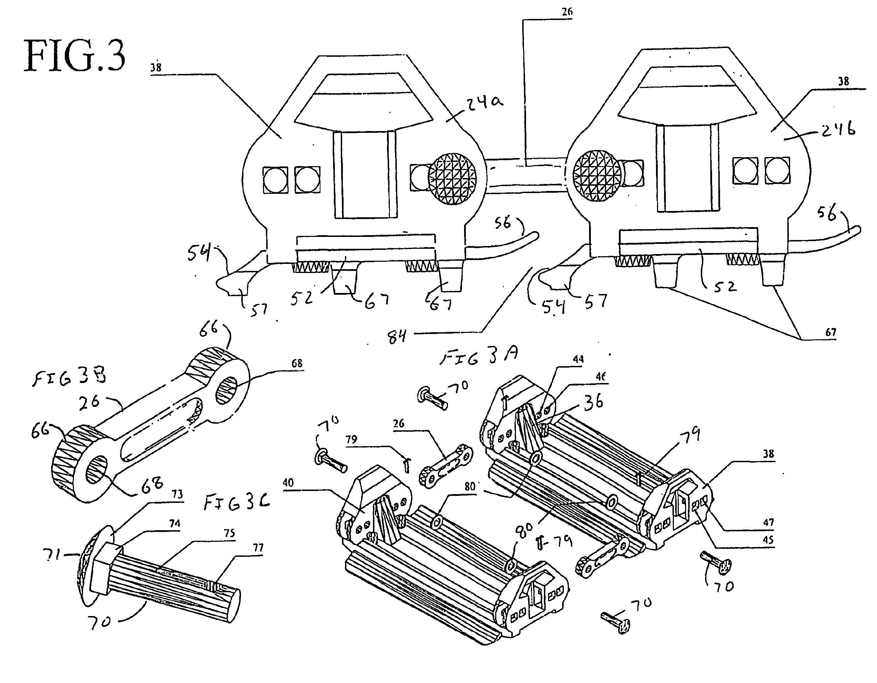

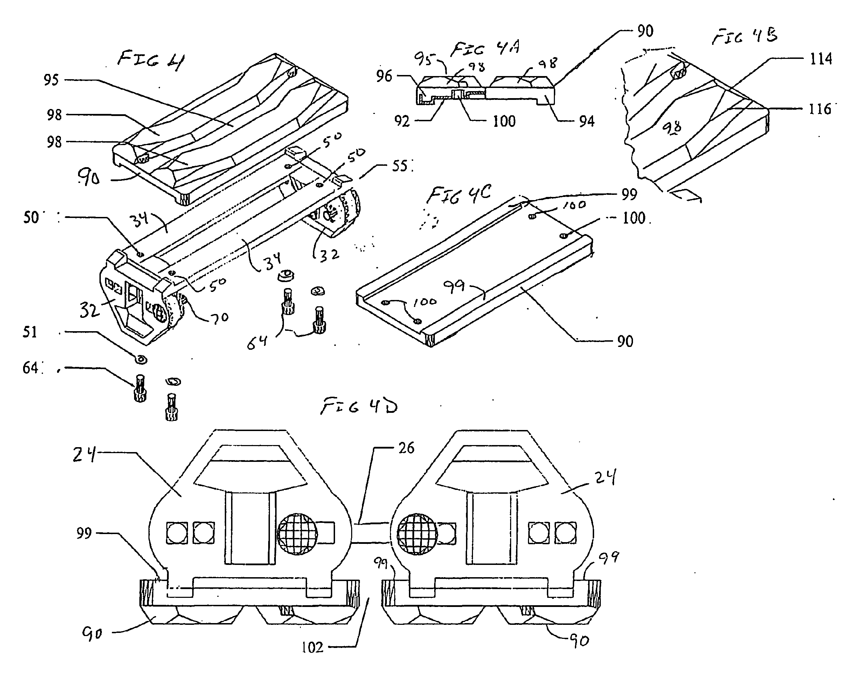

The track (12) comprises multiple components assembled together to form tire chains (12), specifically designed for skid steers (10), but that can also be used on other construction vehicles with similar steering systems. There are five main components and these are called a base (30) (Fig. 2), a shoe (52) (Fig. 2) (and in an alternate embodiment, a rubber shoe (90)) (Figs. 4, 4A, 4B and 4C), a link (26) (Fig. 3B) (pairs of links are used to pivotally connect adjacent bases to form the track) (Fig. 3A), and a pin (70) (Fig. 3C) to secure the links (26) to the bases (24).

The shoe (52) is a forged steel plate with three grousers (57, 67) which can be attached to the base member (30). The shoe (52) delivers low ground pressure and eliminates large open spaces on the track (12) increasing floatation and traction.

The rubber shoe (90) is a rubber plate with defined traction lugs or grousers (98). The skeleton of the rubber shoe (90) is composed of a forged steel core (92) that bolts on to the base member (30) and a molded rubber exterior (94). The rubber shoe (90) eliminates open spaces and prevents the track (12) from damaging hard finished surfaces. The rubber shoe (90) provides traction, and allows the skid steer (10) to cross freely over hard surfaces such as concrete or asphalt.

The base member (30) is a cast piece with at least one cross bar (34) and adjacent connecting ears or side supports (32). The base member (30) allows the track (12) to be properly guided on the skid steer tires (14, 16) while connecting all other components together to form a continuous chain or track. The base member (30) is specifically designed to protect the skid steer tire (14, 16) from contacting the connecting parts the links (26), the pins (70), and the shoes (52, 90) during adverse driving ground conditions. In addition, the base member (30) allows the chain (12) to be easily rebuilt. The base member (30) has a 4-bolt pattern to which the shoe (52) or rubber shoe (90) attaches. The base member (30) also has adjustment holes (44, 46 or 45, 47) for connecting links (26) that allows the chain (12) to be tightened or loosened around the tires (14, 16) of the skid steer (10). The base unit (24) enables skid steers (10) using the chain (12) to selectively employ rubber shoes (90) or metal shoes (52) depending on the particular job application. The invention also allows for easy replacement of worn rubber shoes (90) or metal shoes (52) without the need to dispose of the rest of the chain (12), reducing the operational and maintenance costs.

The link (26) is a forged steel piece that connects subsequent base units (24) together forming the continuous chain (12). The link (26) allows the base units (24) to pivot at different angles while operating the skid steer (10) over uneven surfaces.

The pin (70) preferably is a forged steel carriage bolt with a hole (77) made in its ending tip where a cotter pin (79) is inserted. The pin (70) bolts through the base member (30) and the link (26) to attach them together. Although not a preferable solution, the pin (70) can also be made up of a nut and bolt.

### BRIEF DESCRIPTION OF THE DRAWINGS

Fig. 1A is a side view of a skid steer with a chain made of base units with metal shoes.
Fig 1B is a side view of a skid steer with a chain made of base units having rubber shoes.
Fig. 2 is a perspective exploded view of a base unit and shoe for assembling the chain illustrated in Fig. 1A.
Fig. 3 is a side view of a pair of the base units illustrating the pivotal linked connection between adjacent pairs of the base units in the chain illustrated in Fig. 1A.
Fig. 3A is an exploded perspective view of the pair of base units illustrated in Fig. 3.
Fig. 3B is a perspective view of a link for interconnecting adjacent pairs of the base units as illustrated in Figs. 3 and 3A.
Fig. 3C is a perspective view of a pin for engaging the link and the base unit illustrated in Fig. 3B and Figs. 3 and 3A.
Fig. 4 is an exploded bottom view of the rubber shoe and base unit used in the chain illustrated in Fig. 1B.
Fig. 4A is a partially cut-away end view of the rubber shoe illustrated in Fig. 4 to show features of its construction.
Fig. 4B is a perspective detailed illustration of a portion of the rubber shoe illustrated in Fig. 4.
Fig. 4C is a top view of the rubber shoe illustrated in Fig. 4.
Fig. 4D is a side view illustrating the pivotal linked connection between adjacent pairs of the base units in the chain illustrated in Fig. 1B.
Fig. 5 is a perspective view of an exterior face of a shoe.
Fig. 6 is a perspective exploded view of an embodiment of the invention showing a base unit for assembling the chain illustrated in Fig. 1A.
Fig. 7 is an exploded bottom view of the rubber shoe and another embodiment of the invention showing a base unit used in the chain illustrated in Fig. 1B.
Fig. 8 is a side view illustrating the pivotal linked connection between adjacent pairs of a further embodiment of the invention showing base units in the chain illustrated in Fig. 1B.

### DETAILED DESCRIPTION OF THE PREFERRED EMBODIMENTS

With reference next to the drawings in which like parts have like identifiers, there is shown in Fig. 1A, a skid steer 10 with a plurality of base units (24) pivotally connected together to define a chain (12) embodying the invention in a preferred form. The skid steer (10) includes a pair of opposing wheels (14, 16) on opposing sides of the skid steer. The wheels (14, 16) include conventional skid steer tires. The skid steer (10) includes a bucket (18) connected to distal ends of a pair of lifting arms (20) operable from a cab (22). Each base unit (24) pivotally connects to the adjacent base unit with a pair of opposing links (26). The chain (12) supports the skid steer 10 on the operating surface or ground (28). The chain (12) distributes the weight of the skid steer loader evenly, while providing an increased contact area of the skid steer with the operating surface or ground (28). The weight of the resulting chain (12) provides the skid steer (10) additional stabilization, which is especially beneficial when the machine is traveling uphill or downhill at an angle. The weight of chain (12) further reduces vibrations and shaking that often interfere with the performance of the skid steer (10). The embodiment illustrated in Fig. 1A shows the base unit (24) with a metal shoe (52). In contrast, the alternate embodiment of the tire chain (12) shown in Fig. 1B shows the base unit (24) with a rubber shoe (90).

Fig. 2 is a perspective exploded view of a base unit (24) with a shoe (52) exploded therefrom. The base unit (24) is used with other base units in the chain (12) illustrated in Fig. 1A. The base unit (24) in Fig. 1B differs by having the rubber shoe (90), as discussed below. The base unit (24) is a cast one-piece member generally (30) having a pair of opposing upstanding ears (32). The ears (32) are interlinked by parallel opposing cross-members (34). Each of the ears has a port (120) substantially near the top of the ear to allow for the discharge of debris material. The spaced-apart ears (32) with the cross-members (34) define a recess generally (43) which receives a portion of the tires (14, 16) during operation of the track (12) on the skid steer (10). The at least one cross-member (34) has a protruding cross-member lip (35). Where there is more than one cross member (34), they are spaced apart. The lip (35) engages the tread of the tires (14, 16) during operation of the skid steer (10) with the track (12). A wedge (36) extends from an inner face (40) of the ear (32) and tapers at an oblique angle towards the opposing ear. The wider portion of the wedges (36) are towards the cross-members (34). Each ear (32) has an outer face (38) and the inner face (40). These faces (38, 40) are spaced-apart to define a gap (41) therebetween. Opposing sides of the ears(32)define elongated slots (42) for receiving links (26) into the gap (41) between the faces (38, 40), as described below. Two pairs of circular openings (44, 46) are defined on the inner face (40) of the ears (32) on opposing sides of the wedge (36). Two pairs of rectangular-shaped openings (45, 47) are defined on the outer face (38) of the ears (32) on opposing sides of the wedge (36) in alignment with circular holes (44, 46) on the inner faces (40), for a purpose discussed below. In an alternative embodiment, these holes can be configured with the rectangular-shaped openings (45, 47) on the inside and circular holes (44, 46) on the outer faces (38) The wedges (36) define opposing recess portions or cavities (48) between the respective wedge (36), the inner face (40) of the respective ear (32), and a laterally outward edge of the respective cross-member (34). The at least one cross-member (34) defines a bore (50) within each recess (48) of the base (30).

A shoe guide (55) depends from each of the ears (32). The shoe guides (55) in the illustrated embodiment are generally rectangular shaped projections with an outer sloping edge. An inward backside (59) opposing the sloping edge is flat and perpendicular to the cross-member (34). The shoe guides (55) are transverse to the cross-member (34).

Fig. 2 illustrates a shoe (52) exploded from the base (24). The shoe (52) is a metal plate that includes a leading edge (56) and a trailing edge (54). The trailing portion (58) of the shoe (52) is generally curved in a first direction while the leading portion (60) of the shoe (52) is generally curved in a second opposite direction. Preferably, the trailing edge (54) extends in a direction towards the surface or ground (28) on which the skid steer (10) is being operated during forward operation of the skid steer. A grouser (57) (illustrated in Fig. 3) depends from the trailing edge (54) for engaging the ground (28) during operations of the skid steer. Threaded bores (62) of the shoe (52) align with the openings (50) of the base (30). The lateral outer edges of the shoe (52) align between the shoe guides (55) before the shoe is fastened into position to the lower portion of the base member (30). In the illustrated embodiment, allen-type fasteners (64) (two of which are illustrated) extend through lock washers (51) and the openings (50) to engage the threaded bores (62) in the shoe (52). The allen-type fasteners (64) are disposed within the respective cavity (48) for rigidly connecting the shoe (52) to the base member (30).

Fig. 3 is a side view of a pair of the base units (24), and Fig. 3A is an exploded perspective view of the pair of base units. In the illustrated embodiment, a pair of spaced-apart projecting grousers (67) extend from a bottom surface of the shoe (52). Adjacent base units (24a and 24b) in the chain (12) pivotally connect with a pair of the links (26) that are received in the slots (42). As best illustrated in Fig. 3B, the link (26) is an elongated member having enlarged opposing distal ends (66) that each defines an opening (68). The distal ends (66) are received through the slots (42) of the adjacent base units (24). The openings (68) align with a selected one of the rectangular and circular openings (44, 45; or 46, 47, selectively) in the inner and outer faces (40, 38) . A pin (70) passes through the openings (44, 45; or 46, 47) and the opening (68) to secure the link (26) to the base unit (24).

As best illustrated in Fig. 3C, the pins (70) preferably are carriage bolt-type fasteners, having a semispherical head (71) and flat face (73) on the opposing side of the head. A rectangular flange (74) extends therefrom. The flange (74) aligns with the rectangular openings (45, 47) of the ears (32) in the base member (30). A round shaft (75) extends from the rectangular flange (74) of the pin (70) for aligning with the openings (44, 46) on the inner face (40) at the ear (32). The pins (70) pass through the openings .(44, 45; or 46, 47) and the openings (68) to secure the link (26) to the base unit (24). A round flat washer (80) is received over the shaft (75). The illustrated pin (70) defines a hole (77) in a distal end portion. The hole (77) receives a cotter pin (79) (see Fig. 3A) for securing the pin (70) in position.

As illustrated in Fig. 3, the trailing edge (54) of one shoe (52) overlaps the leading edge (56) of the shoe (52) in the adjacent base unit. This defines an overlap gap (84) between the adjacent shoes (52) of the base units (24).

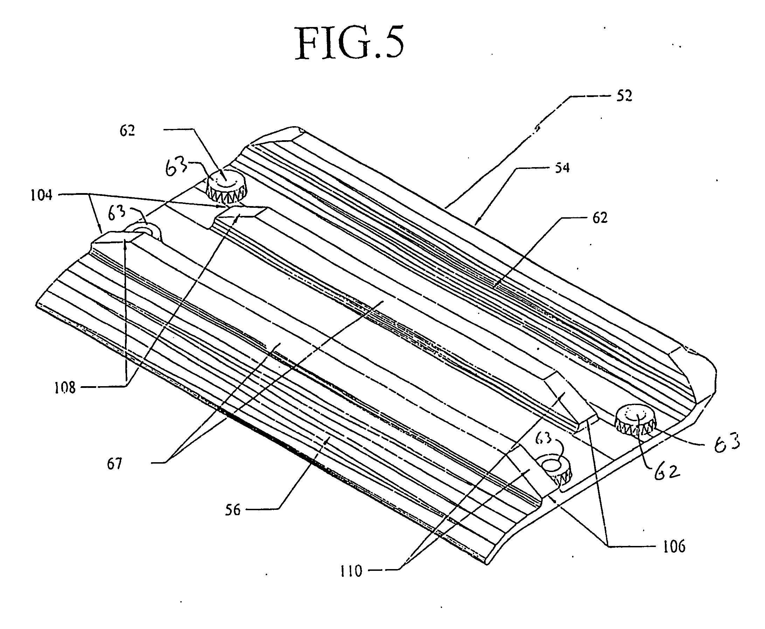

Fig. 5 is a bottom-up view of the shoe (52) illustrating features of the projecting grousers (67) in one embodiment. In this embodiment, the grousers (67) have opposing distal ends (104, 106) that define tapering surfaces (108, 110). These tapering surfaces (108, 110) facilitate rotation and turning of the skid steer (10). In the illustrated embodiment, the bores (62) extend through projections (63) on the bottom surface of the shoe (52).

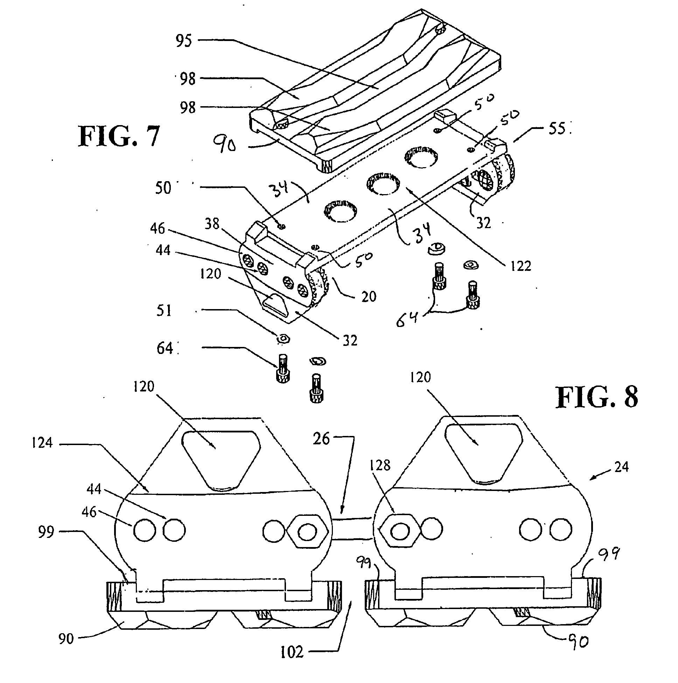

Fig. 4 and Fig. 7 are an exploded view of the base unit (24) illustrated in Fig. 1B equipped with a rubber shoe (90). As shown in partial cross-sectional view in Fig. 4A, the rubber shoe (90) includes a steel core (92), which is sandwiched with molded rubber (94). The rubber (94) defines an exterior wear surface (95) from which grousers (98) project. As shown in the partially cut away view, the rubber (94) is molded to the steel core (92). Fig. 7 shows ports (120) for discharging debris and optional circular cutout regions (122) on the under side of the base unit (34) to lighten the weight of the base unit without decreasing metal strength.

As shown in detail perspective view in Fig. 4B, the distal ends (114) and ending corners (116) of the grousers (90) are tapered to facilitate rotation and turning of the skid steer (10). Fig. 4B also shows a plurality of spaced-apart steel core cups (96) secure the molded rubber (94) to the steel core (92).

Fig. 4C illustrates a bottom view of the rubber shoe (90). The rubber shoe (90) has locking ridges (99) which align with the cross-members (34) in the base member (30). The steel core (92) defines threaded openings (100) that align with the bores (50) of the base unit (24). As shown in Fig. 4, the rubber shoe (90) is secured to the base unit with allen-type fasteners (64).

Fig. 4D and Fig. 8 illustrate a side view of a pair of base units (24) with attached rubber shoes (90). The adjacent base units (24) are joined together with a pair of opposing links (26). The leading edge of the trailing base unit (24) and the trailing edge of the adjacent base unit define a gap (102). The gap (102) allows the base units (24) to bend at different angles on the chain (12) while the skid steer (10) is moving over the ground (28). The gap (102) also allows for chain (12) adjustments. Fig. 8 depicts an alternative embodiment of the invention with ports (120) to allow for discharge of debris. Also shown in this alternative embodiment are bolts (128) for securing a threaded pin (70), whereby the threaded portion of pin (70) extends through the circular openings (44, 46) on outer face (38). A lock washer, such as (51), is fitted over pin (70) to secure bolts (128).

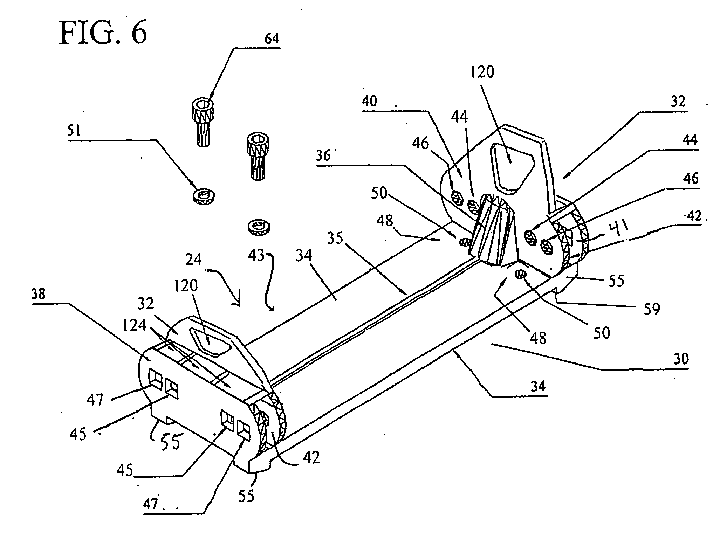

Fig. 6 illustrates a base unit (24) in an alternative embodiment with only one cross member. Also depicted are ports (120) for discharge of debris from the base unit. Fig. 6 also depicts top openings (124) in the link chamber formed by the outer wall (38) and the ear (32). This top opening (124) is designed to allow for the discharge of debris that may enter around the links (26) when received in slots (42).

With reference to Figs. 1A, 2, and 3, the chain (12) is used with the skid steer (10) having opposing pairs of wheels (14, 16) for moving the loader at a construction site. The base units (24) are assembled by first connecting the shoe (52) or rubber shoe (90) to the base member (30). This is accomplished by aligning the shoe (52) or the rubber shoe (90) with the bottom of the base member (30) against the shoe guides (55). Then the allen-type fasteners (64) extend through lock washers (51), the aligned holes (50) in the cross-members (34) of the base member (30), and engage the threaded holes (62) in the shoe (52) or threaded holes (100) in the rubber shoe (90). The heads of the allen-type fasteners (64) are received in the recesses (48). These types of fasteners are preferable over nuts that wear on the outside surfaces due to sand, dirt, pebbles, that round the edges which make the nuts difficult to remove for repair or replacement of the track and the shoes. Moreover, the holes (50) are located on opposite ends of the cross-member (34) strengthening the support of the allen-type fasteners (64) to the shoe (52) or rubber shoe (90). The threaded holes (62) and (100) eliminate the need for fasteners on the wear surface of either the shoe (52) or rubber shoe (90). It is to be appreciated that the allen-type fastener (64) has an enclosed tool bed, which sustains exterior wear, yet and allows the allen-type fastener (64) to be easily removed if necessary. The compact size of the allen-type fastener (64) allows it to fit within the recess (48) and thereby avoid contact with the tire (14, 16), during operation of the skid steer (10) with the chain (12).

With reference to Figs. 1A, 3 and 4D, the base units (24) are then assembled into the chain (12). This is accomplished by connecting adjacent base units (24) with the opposing pairs of links (26). One of the links (26) inserts through one of the slots (42) in the ear (32) of one of the base units (24). The link (26) is fastened thereto by passing the pin (70) into the hole (44, 45; or 46, 47, selectively), depending on the spacing desired between adjacent base units (24). The rectangular flange (74) of the pin (70) conforms to the square-shape of the holes (45, 47) and prevents the pin (70) from turning.

With the pin (70) locked in position, two sides of the pin (70) will receive most of the wear during operation. After sustaining substantial wear from operation of the chain (12), the pin (70) can be repositioned 90 degrees from its original position within the holes (45, 47) for additional usage. The shaft of the pin (70) passes through the opening (68) in the link (26) and a flat washer (80) touching against the inner face (40) of the ear (32). The pin (70) can be threaded to receive a bolt (128) or have a hole (77) to receive a cotter pin (79). The cotter pin (79) extends through the hole (77). The free ends of the cotter pin (79) fold back to secure the pin (70) to the link (26) and to the base unit (24). The cotter pin (79) prevents the pin (70) from dislodging. Moreover, the cotter pin (79) is preferred because it is able to sustain heavy vibration unlike threaded nuts that might otherwise be shaken off or worn down during operation of the skid steer (10). The distal end of the pin (70), flat washer (80), and the folded cotter pin (79) lie within the recess (48). The pin (70) is positioned flat against the outer wall (38) with its concave head (71) facing outwardly away from the base (24). In this position, the head (71) of the pin (70) will accept wear or blows from contacting the ground (28) during operation. This position prevents the pin (70) fastener from becoming damaged or dislodged when making contact with the ground (28). The cavity (48) provides a sheltered location where all connection points lie. The recess (48) allows all connecting parts (70, 80, 79, 64, and 51) to act freely from contact or wear by the tires (14, 16), thereby preventing wear on both the adjoining parts and the tires.

The chain (12) is then wrapped over the spaced-apart tires (14, 16) of the skid steer (10), and the opposing distal ends of the chain (12) secured with the links (26) as discussed above. Portions of the tires (14, 16) become wedged in the recess (43) defined by the opposing ears (32) and the wedge- shaped extending surfaces (36) during operation of the track (12). During usage, the interior expulsion ports (120) allow debris materials to be expelled during usage instead of building up and fouling the chain. With reference to Figs. 1, 2, and 3, the tires are resilient, and so are engagingly contacted by the cross-member lip (35), which prevent the tires from slipping over the at least one cross-member (34) and into the cavity (48) between the opposing extending surfaces (36).

During operation of the skid steer (10), the chain (12) rotates in response to rotation of the drive wheels (14, 16). The tires engage and release from the recesses (43) in the base units (24) in sequence as the chain (12) moves. This facilitates the tires retaining the chain (12) in line. Further, the extending surfaces (36) restrict the tires from entering the recesses (48), and thereby keeping the tires away from the fasteners (64), lock washers (51), pin (70), flat washers (80), and cotter pin (79).

The trailing edge (54) of the shoe (52), together with the grousers (57, 67), dig into the ground as the tires (14, 16) rotate, thereby providing traction for moving the skid steer (10) across the ground (28). The tapered distal ends (104, 106) of the shoe (52) facilitate the rotation and turning of the skid steer (10) by allowing the shoes (52) to slide freely in parallel direction to the grousers (67) when turning. The tapered surfaces (108 and 110) prevent the shoe (52) from sticking to the ground (28) when sliding side-ways during a turn of the skid steer (10). The trailing edge (54) of the shoe (52) on the leading base unit (24) overlaps the leading edge (56) of the shoe (52) of the following adjacent base unit (24) on the chain (12). The gap (84) is narrow and close, and allows the chain (12) to rotate around the diameter of the wheels (14, 16), as illustrated in Fig. 1A. The overlapping leading and trailing portions of the shoes (52) lock together and the gap (84) closes by upward pressure of the ground materials and restricts significant amounts of mud, sand, and the like from passing between the chain (12).

Further, the shoe (52), secured by the four fasteners (64) distributes the loading across the base member (30) and the cross-members (34). The overlapping shoes (52) restrict the passage of mud, sand, and the like into the chain 12 and the space between opposing tires (14, 16). The substantially closed chain (12) accordingly provides floatation for the skid steer (10) as it travels, turns, and scoops in mud, sand, and other soft ground, to provide improved traction while reducing the tendency of the skid steer compact loader to sink during operations.

The grousers (57, 67), the trailing edge (54), and the bottom surface of the shoe (52), define wear surfaces for the chain (12). The shoe (52) is readily replaceable. The fasteners (64) are removed from the worn or broken shoes (52) and the shoes are readily and easily replaced.

In the alternate embodiment illustrated in Fig. 4, the rubber shoe (90) provides a resilient surface for operating the loader (10) on finished surfaces such as roadways, sidewalks, and the like, without damage. The rubber shoe (90) is readily installed, as discussed above, with the fasteners (64). The rubber grousers (98) dig into the ground as the wheels rotate, thereby providing traction for moving the skid steer (10) across the ground (28). The tapered distal ends and corners (114, 116) facilitate rotation and turning of the skid steer (10) by allowing the rubber shoe to slide freely in parallel direction to the grousers (98) when turning. The tapered surfaces (114 and 116) prevent the shoe (90) from sticking to the ground (28) when sliding side-ways during a turn of the skid steer (10). The narrow gap (102) between rubber shoes (90) restrict the passage of mud, sand, and the like into the chain (12) and the space between opposing tires (14, 16). The substantially closed space chain (12) provides floatation for the skid steer (10) as it travels, turns, and scoops in mud, sand, and other soft ground, to provide improved traction while reducing the tendency of such compact loaders to sink during operations. The interior expulsion ports (120) in ears (32) provide for the discharge of whatever debris material that may become caught in the wheel side portion of the chain (12). These ports (120) are an improvement over the prior art because they enable the debris material to be discharged, thereby preventing the debris material from building up on the tire side of chain (12) and causing the chain (12) to break.

With reference to Fig 2, the shoe guides (55) allow either the rubber shoe (90) or shoes (52) to be positioned properly before being fastened to the base member (30). In addition, shoe guides (55) reinforce and secure the shoe (52) or rubber shoe (90) during operation of the skid steer (10). The locking ridges (99) of the rubber shoe (50) facilitate aligning the rubber shoe with the cross-members (34).

The base unit (24) and chain (12) as described above overcomes the limitations and drawbacks found in skid steer loaders and tire chains with improved performance and use of tire chains (12). First, the large open space between the tires (14, 16) no longer fills with debris, which if permitted to seep or rise up can cause the machine to sink quickly. This enables the skid steer to have lower ground pressure with increased floatation. Second, traction is increased because the added floatation allows the skid steer to operate above the boggy surface. Thus, the tire chain (12) provides the skid steer with better and more effective contact with the operating surface or ground. Third, the rubber shoe enables the skid steers to travel freely over hard finished surfaces without causing damage. Fourth, the 4-bolt attachment system allows users to choose selectively between shoe (52) and rubber shoe (90), depending on the particular requirements and limitations of the work to be accomplished. Fifth, worn shoes (52), rubber shoes (90), or damaged parts, can be replaced easily eliminating the need to purchase an entirely new set of tire chains. The base (24), which is the most complicated and expensive component of the chain (12), makes virtually no contact with the operating ground and is thus protected from wear. Sixth, the tapered distal ends and corners of both shoe (52) and rubber shoes (90) facilitate rotation and turning of the skid steer (10). Seventh, the weight of the base units (24) provides the skid steer 10 with additional and improved operational stabilization. Eighth, the feature of interior expulsion ports (120) in ears (32) allow for the ready discharge of debris material caught on the wheel side of tire chain (12). This enables the tire chain (12) to be cleared more readily from debris materials, such as mud, gravel and dirt that build up on the inside portion of the tire chain (12). Ninth, the feature of optional circular cutout regions (122) to lighten the weight of the metal without diminishing the strength of the metal. Tenth, the link chamber top openings (124) to allow debris material to discharge when caught in the chamber where links are received.

The base units (24) and the chain (12) assembled with a plurality of such units meet the need in the art by overcoming the limitations and drawbacks associated with the current tires and tire chains for skid steers. While the present invention has been described in detail with particular references to the preferred embodiments thereof, it should be understood that many modifications, additions and deletions, in addition to those expressly recited, may be made thereto without departure from the scope of the invention as set forth in the claims.

## Claims

1. A base unit (24) for a circular track (12) that is placed about wheels (14, 16) of a parallel wheeled vehicle for increasing traction of the vehicle, said base unit comprising:
two side members (32), each having an inner plate (40) and an outer plate (38), and a top edge and a bottom edge; and
at least one cross-member (34) spanning between said side members near said bottom edges of said side members, **characterised by** each of said inner plates (40) of said side members having a port (120) substantially near said top edge formed by the inner plate (40), wherein said at least one cross-member is capable of receiving a detachable base pad (90) and said port is capable of expelling any dirt that may accumulate between said wheels and said track to reduce the likelihood of the accumulation of excess pressure between said track that may cause breakage of said track.

2. A base unit as claimed in claim 1 wherein:
said at least one cross member has a first end, a second end and two lateral edges, and wherein the base unit additionally comprises a base pad capable of being detachably secured to said cross member such that said base pad extends beyond at least one of said lateral edges of said cross member whereby said base pad can serve to block dirt from passing between adjacent base units of said circular track.

3. A base unit as claimed in claim 2 wherein the at least one cross member has a bottom area; and wherein
the base pad has a bottom surface area that is larger than said bottom area of said cross member.

4. A base unit as claimed in claim 2 or 3 wherein said base pad is secured by four allen-type screws (64), said allen-type screws received by receptacles located in cavities (50) at opposite ends of said cross member near said side members.

5. A base unit as claimed in claim 4 wherein said cavities protect said allen-type screws from wear by said wheel and debris.

6. A base unit as claimed in any preceding claim wherein each of said two side members has a portion (36) extending as an interior surface (40) at an oblique angle towards the opposing side member, whereby during operative use of the base unit a portion of a tyre is momentarily wedgingly received in a gap between the opposing side members;
the extending portion of the side members each defining a pair of opposing cavities (48) between the extending portion, the side member, and respective laterally outwardly edges of the at least one cross-member, and the cross member defining a bore (50) within the respective cavities for receiving a fastener (64) therethrough; and additionally comprising
at least one base pad (90) attached with fasteners to a lower surface of the at least one cross member with the fasteners received in the bores.

7. A base unit as claimed in claim 6, wherein the bores are substantially entirely within a space between the side members and a line parallel to a longitudinal axis of the base unit at the extent of the extending portion of the side member at a junction thereof with the at least one cross member.

8. A base unit as claimed in claim 6 or 7, wherein the base pad defines threaded openings for engaging a threaded fastener (64) that passes through the bores to the base pad.

9. A base unit as claimed in claim 6, 7 or 8, wherein
the pair of inner and outer plates define a gap therebetween for receiving a member (26) to connect one base unit to an adjacent base unit;
the plates defining aligned openings (44, 45, 46, 47) for receiving a fastener (70) therethrough to connect said member to the side member; and
at least one top opening (124) provided tin the side member to allow for the discharge of debris from the gap between the spaced-apart inner and outer plates.

10. A base unit as claimed n claim 9, wherein each fastener (70) comprises a carriage bolt (128) having a convex head (71) disposed inwardly of the inner plate and the fastener (64) engaged on an exterior side of the respective inner plate, the bolt (128) passing through the opening in the side member, whereby the member is pivotally connected to the track.

11. A base unit as claimed in claim 10, wherein the fastener (70) is secured by the bolt (128) and a lock washer (51).

12. A base unit as claimed in any of claims 6 to 11, wherein the base pad comprises a composite assembly of a rigid steel core (92) sandwiched with molded rubber (94) having projecting grousens (98).

13. A base unit as claimed in any preceding claim, wherein the at least one cross member has a protruding lip (35) to engage with the tread of tyres during operation.

14. A circular track for placing about wheels of a paralleled wheeled vehicle to increase traction, comprising a plurality of base units as claimed in any preceding claim, the base units being pivotally interconnected in series by a pair of links (26).

## Patentansprüche

1. Basiseinheit (24) für eine umlaufende Kette (12), die um Räder (14, 16) eines parallel bereiften Fahrzeugs platziert ist, zur Erhöhung der Traktion des Fahrzeugs, wobei die Basiseinheit aufweist:
zwei Seitenelemente (32), die jeweils eine innere Platte (40) und eine äußere Platte (38) sowie eine Oberkante und eine Unterkante haben; und
wenigstens eine Querstrebe (34), die sich zwischen den Seitenelementen in der Nähe der Unterkanten der Seitenelemente erstreckt,
**dadurch gekennzeichnet, dass** jede der inneren Platten (40) der Seitenelemente eine Öffnung (120) im Wesentlichen nahe der Oberkante hat, die von der inneren Platte (40) geformt ist,
wobei die wenigstens eine Querstrebe in der Lage ist, eine lösbare Basisauflage (90) aufzunehmen, und die Öffnung in der Lage ist, Schmutz frei zu setzen, der sich zwischen den Rädern und der Kette anhäufen kann, um die Wahrscheinlichkeit der Aufstauung von Überdruck zwischen der Kette zu verringern, der einen Bruch der Kette verursachen kann.

2. Basiseinheit nach Anspruch 1, wobei:
die wenigstens eine Querstrebe eine erstes Ende, ein zweites Ende und zwei seitliche Kanten hat, und wobei die Basiseinheit zusätzlich eine Basisauflage aufweist, die in der Lage ist, lösbar an der Querstrebe so befestigt zu werden, dass die Basisauflage sich über wenigstens eine der seitlichen Kanten der Querstrebe hinaus erstreckt, wodurch die Basisauflage dazu dienen kann, Schmutz daran zu hindern, zwischen benachbarte Basiseinheiten der umlaufenden Kette zu gelangen.

3. Basiseinheit nach Anspruch 2, wobei die wenigstens eine Querstrebe einen unteren Bereich hat; und
die Basisauflage einen unteren Oberflächenbereich hat, der größer ist als der untere Bereich der Querstrebe.

4. Basiseinheit nach Anspruch 2 oder 3, wobei die Basisauflage durch vier Imbusartige Schrauben (64) befestigt ist, wobei die Imbus-artigen Schrauben von Aufnahmen aufgenommen sind, die in Aussparungen (50) an gegenüberliegenden Enden der Querstrebe nahe den Seitenelementen angeordnet sind.

5. Basiseinheit nach Anspruch 4, wobei die Aussparungen die Imbus-artigen Schrauben vor Abnutzung durch das Rad und Schmutz schützen.

6. Basiseinheit nach einem der vorhergehenden Ansprüche, wobei jedes der zwei Seitenelemente einen Abschnitt (36) hat, der sich als eine innere Oberfläche (40) mit einem schiefen Winkel in Richtung auf das gegenüberliegende Seitenelement erstreckt, wodurch während des operativen Gebrauchs der Basiseinheit eine Abschnitt eines Reifen vorübergehend eingekeilt in einer Lücke zwischen den gegenüberliegenden Seitenelementen aufgenommen ist;
wobei der sich erstreckende Abschnitt der Seitenelemente jeweils ein Paar von gegenüberliegenden Hohlräumen (48) zwischen dem sich erstreckenden Abschnitt, dem Seitenelement und den jeweils seitlich außenliegenden Kanten der wenigstens einen Querstrebe definiert, und wobei die Querstrebe eine Bohrung (50) innerhalb der jeweiligen Hohlräume zur Aufnahme eines Befestigungsmittels (64) dort hindurch definiert; und zusätzlich aufweist
wenigstens eine Basisauflage (90), die mit Befestigungselementen an einer unteren Oberfläche der wenigstens einen Querstrebe mit den Befestigungsmitteln befestigt ist, die in den Bohrungen aufgenommen sind.

7. Basiseinheit nach Anspruch 6, wobei die Bohrungen im Wesentlichen vollständig innerhalb eines Raums zwischen den Seitenelementen und einer Linie liegen, die parallel zu einer Längsachse der Basiseinheit ist, am Umfang des sich erstreckenden Abschnitt des Seitenelements an seiner Verbindungsstelle mit der wenigstens einen Querstrebe liegen.

8. Basiseinheit nach Anspruch 6 oder 7 , wobei die Basisauflage Gewindeöffnungen zur Betätigung eines Gewindebefestigungsmittels (64) definiert, die durch die Bohrungen zur Basisauflage gelangen.

9. Basiseinheit nach Anspruch 6, 7 oder 8, wobei das Paar von inneren und äußeren Platten eine Lücke zwischen sich zur Aufnahme eines Elements (26) definiert, um eine Basiseinheit mit einer benachbarten Basiseinheit zu verbinden;
wobei die Platten in Line angeordnete Öffnungen (44, 45, 46, 47) zur Aufnahme eines Befestigungsmittels (70) durch sie hindurch definieren, um das Element mit dem Seitenelement zu verbinden; und
wenigstens einer oberen Öffnung (124), die in dem Seitenelement vorgesehen ist, um die Entsorgung von Schmutz aus der Lücke zwischen den beanstandeten inneren und äußeren Platten zu erlauben.

10. Basiseinheit nach Anspruch 9, wobei jedes Befestigungsmittel (70) eine Schlossschraube (128) mit einem konvexem Kopf (71) aufweist, der innenseitig an der inneren Platte und dem Befestigungsmittel (64)angeordnet ist, das an der äußeren Seite der jeweiligen inneren Platte eingreift, wobei der Bolzen (128) durch die Öffnung in dem Seitenelement gelangt, wodurch das Element gelenkig mit der Kette verbunden ist.

11. Basiseinheit nach Anspruch 10, wobei das Befestigungsmittel (70) durch den Bolzen (128) und eine Sicherungsscheibe (51) gesichert ist.

12. Basiseinheit nach einem der Ansprüche 6 bis 11, wobei die Basisauflage eine zusammengesetzte Anordnung aus einem starren Stahlkern (92) aufweist, der zwischen geformtem Gummi (94) aufgenommen ist, das vorspringende Greiferplatten (98) hat.

13. Basiseinheit nach einem der vorhergehenden Ansprüche, wobei die wenigstens eine Querstrebe eine vorspringende Lippe (35) zum Eingriff mit der Lauffläche der Reifen beim Betrieb hat.

14. Umlaufende Kette zum Platzieren um Räder eines parallel bereiften Fahrzeugs zur Erhöhung der Traktion, die eine Vielzahl von Basiseinheiten nach einem der vorhergehenden Ansprüche aufweist, wobei die Basiseinheiten gelenkig untereinander in Serie durch ein Paar von Gelenken (26) verbunden sind.

## Revendications

1. Unité de base (24) pour une chenille circulaire (12) qui est placée autour de roues (14, 16) d'un véhicule à roues parallèles afin d'améliorer la traction du véhicule, ladite unité de base comprenant :
deux éléments latéraux (32), chacun ayant une plaque intérieure (40) et une plaque extérieure (38) et un bord supérieur et un bord inférieur ; et
au moins une entretoise (34) qui s'étend entre lesdits éléments latéraux près desdits bords inférieurs desdits éléments latéraux, **caractérisée en ce que** chacune desdites plaques intérieures (40) desdits éléments latéraux a un orifice (120) placé sensiblement près dudit bord supérieur formé par la plaque intérieure (40), dans laquelle ladite au moins une entretoise peut recevoir un segment de base détachable (90) et ledit orifice peut expulser la poussière qui peut s'accumuler entre lesdites roues et ladite chenille afin de réduire l'éventualité de l'accumulation de pression en excès entre ladite chenille qui pourrait provoquer la rupture de ladite chenille.

2. Unité de base telle que revendiquée dans la revendication 1 dans laquelle :
ladite au moins une entretoise présente une première extrémité, une seconde extrémité et deux bords latéraux, et dans laquelle l'unité de base comprend de plus un segment de base pouvant être fixé de manière détachable sur ladite entretoise de sorte que ledit segment de base s'étend au-delà d'au moins l'un desdits bords latéraux de ladite entretoise grâce à quoi ledit segment de base peut servir à bloquer la poussière et l'empêcher de passer entre les unités de base adjacentes de ladite chenille circulaire.

3. Unité de base telle que revendiquée dans la revendication 2, dans laquelle la au moins une entretoise présente une surface inférieure ; et dans laquelle le segment de base présente une superficie inférieure qui est supérieure à la superficie inférieure de ladite entretoise.

4. Unité de base telle que revendiquée dans la revendication 2 ou 3 dans laquelle ledit segment de base est fixé par quatre vis à six pans creux (64), lesdites vis de type à six pans creux étant reçues par des réceptacles situées dans des cavités (50), situées aux extrémités opposées de ladite entretoise près desdits éléments latéraux.

5. Unité de base telle que revendiquée dans la revendication 4 dans laquelle lesdites cavités protègent lesdites vis de type à six pans creux contre l'usure provoquée par ladite roue et des débris.

6. Unité de base telle que revendiquée dans l'une quelconque des revendications précédentes dans laquelle chacun desdits deux éléments latéraux présente une portion (36) qui s'étend en tant que surface intérieure (40) suivant un angle oblique vers l'élément latéral opposé, grâce à quoi pendant l'utilisation en fonctionnement de l'unité de base une portion d'un pneu est reçue momentanément pour coincement dans un interstice situé entre les éléments latéraux opposés ;
la portion allongée des éléments latéraux définissant chacun une paire de cavités opposées (48) entre la portion allongée, l'élément latéral, et des bords tournés vers l'extérieur latéralement respectifs de la au moins une entretoise, et l'entretoise définissant un alésage (50) à l'intérieur des cavités respectives pour recevoir une attache (64) à travers celle-ci ; et comprenant en outre
au moins un segment de base (90) fixé par les attaches à une surface inférieure de la au moins une entretoise, les attaches étant reçues dans les alésages.

7. Unité de base telle que revendiquée dans la revendication 6, dans laquelle les alésages sont sensiblement entièrement situés à l'intérieur d'un espace compris entre les éléments latéraux et une ligne parallèle à un axe longitudinal de l'unité de base dans la mesure de la portion allongée de l'élément latéral à une jonction de celle-ci avec la au moins une entretoise.

8. Unité de base telle que revendiquée dans la revendication 6 ou 7, dans laquelle le segment de base définit des ouvertures filetées destinées à s'engager sur une attache filetée (64) qui traverse les alésages (9) au segment de base.

9. Unité de base telle que revendiquée dans la revendication 6, 7 ou 8, dans laquelle
la paire de plaques interne et externe définit un interstice entre celles-ci destiné à recevoir un élément (26) pour raccorder une unité de base à une unité de base adjacente ;
les plaques définissant les ouvertures d'alignement (44, 45, 46, 47) destinées à recevoir une attache (70) à travers celles-ci pour raccorder ledit élément audit élément latéral ; et
au moins une ouverture supérieure (124) dans l'élément latéral pour permettre l'évacuation des débris de l'interstice situé entre les plaques interne et externe espacées.

10. Unité de base telle que revendiquée dans la revendication 9, dans laquelle chaque attache (70) comprend un boulon de carrosserie (128) ayant une tête convexe (71) disposée à l'intérieur de la plaque interne et l'attache (64) engagée sur le côté externe de la plaque interne respective, le boulon (128) traversant l'ouverture prévue dans l'élément latéral, moyennant quoi l'élément est raccordé pour pivoter à la chenille.

11. Unité de base telle que revendiquée dans la revendication 10, dans laquelle l'attache (70) est fixée par le boulon (128) et une rondelle de blocage (51).

12. Unité de base telle que revendiquée dans l'une quelconque des revendications 6 à 11, dans laquelle le segment de base comprend un ensemble composite d'un noyau en acier rigide (92) intercalé entre des bords côtes moulés (94) présentant des traverses de chenille en saillie (98).

13. Unité de base telle que revendiquée selon l'une quelconque des revendications précédentes, dans laquelle la au moins une entretoise présente une lèvre en saillie (35) destinée à s'engager sur la bande de roulement des pneus pendant le fonctionnement.

14. Chenille circulaire destinée à être placée autour des roues d'un véhicule à roues parallèles pour améliorer la traction, comprenant une pluralité d'unités de base telles que revendiquées dans l'une quelconque des revendications précédentes, les unités de base étant reliées entre elles pour pivoter en série par une paire de maillons (26).
